# EUROPEAN PATENT SPECIFICATION

(11) **EP 0 434 350 B1**
(45) Date of publication and mention of the grant of the patent: **19.10.1994**
(21) Application number: 90313797.4
(22) Date of filing: 18.12.1990
(51) Int. Cl.: B23K 11/00, B23K 11/36

(54) **Automatic feed system for parts to be welded**
Automatisches System zur Versorgung von zu schweissenden Teilen
Système d'alimentation automatique d'éléments devant être soudés

(30) Priority: 19.12.1989 JP 145502/89
(43) Date of publication of application: 26.06.1991
(73) Proprietor: YAJIMA KOGYO, INC., Nagoya-shi, Aichi-ken (JP)
(72) Inventor: Tanaka, Tetsunori, Toyota-shi, Aichi-ken (JP); Sagara, Shizuo, Toyota-shi, Aichi-ken (JP); Koda, Nobuji, Kasugai-shi, Aichi-ken (JP); Tanabe, Takehito, Ichinomiya-shi, Aichi-ken (JP)
(74) Representative: Bannerman, David Gardner

(56) References cited:
- EP-A- 0 284 467
- EP-A- 0 395 421
- DE-B- 1 165 784
- US-A- 4 873 412

## Description

The present invention relates to an automatic feed system for a part to be resistance-welded and, more particularly, to an automatic feed system to be used when a T-shaped part such as a bolt is projection-welded to a work.

The conventional procedure for projection welding a bolt to a work-piece involves, first of all, normally positioning the work-piece (eg a steel sheet) with respect to the lower electrode of a resistance welding machine by aligning a welding preliminary hole formed in the work-piece with a relief hole formed in the central portion of the lower electrode. The stem of the bolt is then inserted into the welding hole and its head pushed onto the work-piece by lowering the upper electrode. A welding current is passed between the upper and lower electrodes to effect the projection welding between the bolt and the work-piece.

EP-A-O 395 421 (which document falls under Article 54(3) EPC) describes a feed device for a welding bolt for use in resistance welding. The feed device involves the use of a fixed welding bolt feed pipe which delivers bolts to a bolt grasping section having a bolt receptacle. The bolt grasping section is movable form a position beneath the feed pipe to an advance position away from the feed pipe. In the advance position, the bolt receptacle is positioned to enable the bolt to be urged out the receptacle and into a welding position by an inserting device.

Figure 9 of the accompanying drawings shows (schematically) a bolt feed system such as disclosed in JP-A-60-54832 for feeding the bolt automatically to the welding preliminary hole of the work. In this system, an axially movably guide pin 2 fitted in the lower electrode 1 of a welder is urged upward by a spring 3, into a (welding preliminary) hole 5 in a work-piece so as to locate the work-piece 4 with respect to the lower electrode 1. The bolt 6 to be welded is then fed by a chute (not shown ) until it is chucked at the terminal end of the chute by chucking means 7.

The chucked bolt 6 is transferred into line with the path of relative movement of the upper and lower electrodes 8, 1 and pushed by the upper electrode 8, the fingers 7a of the chuck 7 being opened in response to movement of the upper electrode 8 to push the bolt 6 downward away from the chuck 7 such that its stem 6b advances through the welding hole 5 of the work-piece 4 into the lower electrode 1 until head projections 6a on the bolt 6 bear upon the work-piece 4. Welding current is then passed between the upper electrode 8 and the lower electrode 1 so that the bolt 6 is projection-welded at its projections 6a to the work 4.

One disadvantage of this system, however, is that the fingers 7a of the chuck 7 and the upper electrode 8 slide in contact with each other each time the bolt 6 is pushed. Thus the leading end of the upper electrode 8 becomes badly worm to the extent that the leading end is no longer flat giving rise to the tendency to push the bolt obliquely. In order to avoid this problem, it is necessary to repair or replace the electrode frequently.

Moreover, the chuck for chucking the bolt is affected at each welding operation by the excess pressure of the electrode and the welding heat so that the durability of the chuck reduces making chucking of the bolt instable. Improper insertion of the bolt results and this is difficult to detect. Production is therefore of unreliable quality.

One object of this invention is to eliminate the wear of the electrode due to the chuck and the chucking failure of the part due to the electrode pressure and the welding heat.

In order to achieve the above-specified object, according to the present invention, there is provided an automatic apparatus for feeding a work-part to be welded in a hole in a work-piece, the apparatus comprising feed means for feeding the work-part to the vicinity of a welding electrode; chuck means for removably chucking the work-part fed by the feed means; first transfer means for transferring a work-part delivery portion of the feed means to and from a delivery position wherein the work-part is delivered to the chuck means; a guide pin carried by the electrode for insertion into the work-piece when said work-piece is to be positioned; second transfer means for positioning the work-part, held by the chuck means concentrically of the guide pin of the electrode and including push means for pushing the work-part, concentrically of the guide pin, to insert the work-part into the hole in the said work-piece.

In the automatic part feed system thus constructed, the part fed by the feed means is chucked by the chuck. When the part is chucked, the feed means has its trailing end moved apart from the chuck means by the first transfer means. When the trailing end of the feed means is moved apart from the chuck means, the part chucked by the chuck means is positioned concentrically of the guide by the second transfer means. Then, the positioned part is released from the chuck means and inserted into the hole of the work by the pushing force of the push means.

Thus, in the present invention, the part is pushed not by the electrode but the push means. As a result, there is no sliding contact between the electrode and the chuck means so that the electrode life is extended far more than that of the system of the prior art.

Since, moreover, the chuck means can be transferred by the second transfer means, the chuck means can be brought in the welding operation apart from the electrode so that it can be protected from the electrode pressure and the welding heat. As a result, it is possible to improve the durability and reliability of the chuck means and eliminate chucking failures.

An embodiment of the invention will not be described by way of example with reference to the accompanying drawings, in which:
Fig. 1 is a perspective view of a part an automatic part feed system;
Fig. 2 is a front elevation showing the whole structure of the system of Fig. 1;
Figs 3(a) and 3(e) are side elevations showing the individual steps of the projection welding by the system of Fig. 1;
Fig. 4 is an enlarged front elevation showing the chuck means of the system of Fig. 1;
Fig. 5 is an enlarged section showing a portion of the first transfer means of the system of Fig. 1;
Fig. 6 is an enlarged section showing a portion of the push means of the system of Fig. 1;
Fig. 7 is an enlarged section showing the guide mechanism of the push means of the system of Fig. 1;
Fig. 8 is an enlarged front elevation of the guide hole of the guide mechanism of Fig. 7; and
Fig. 9 is a section showing a part of a conventional automatic part feed system.

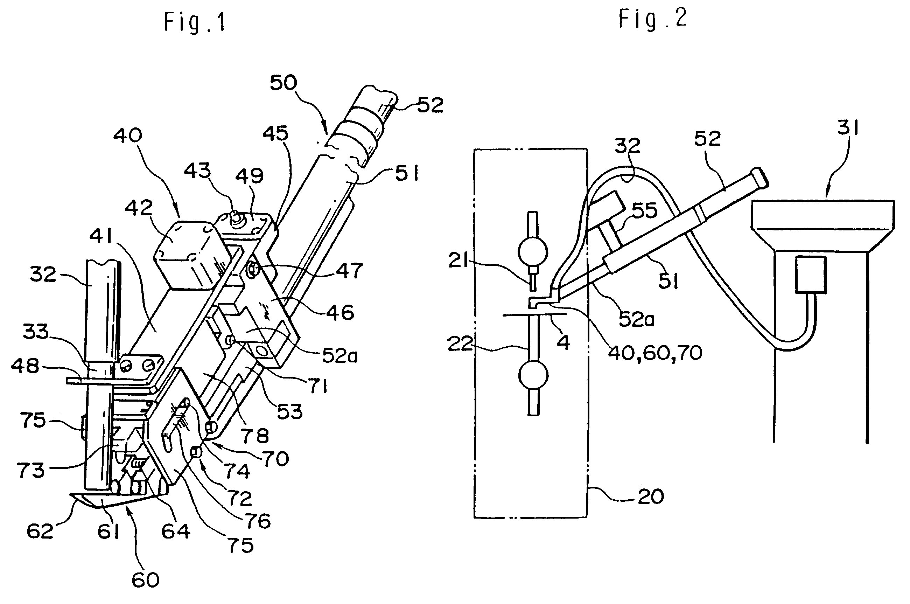

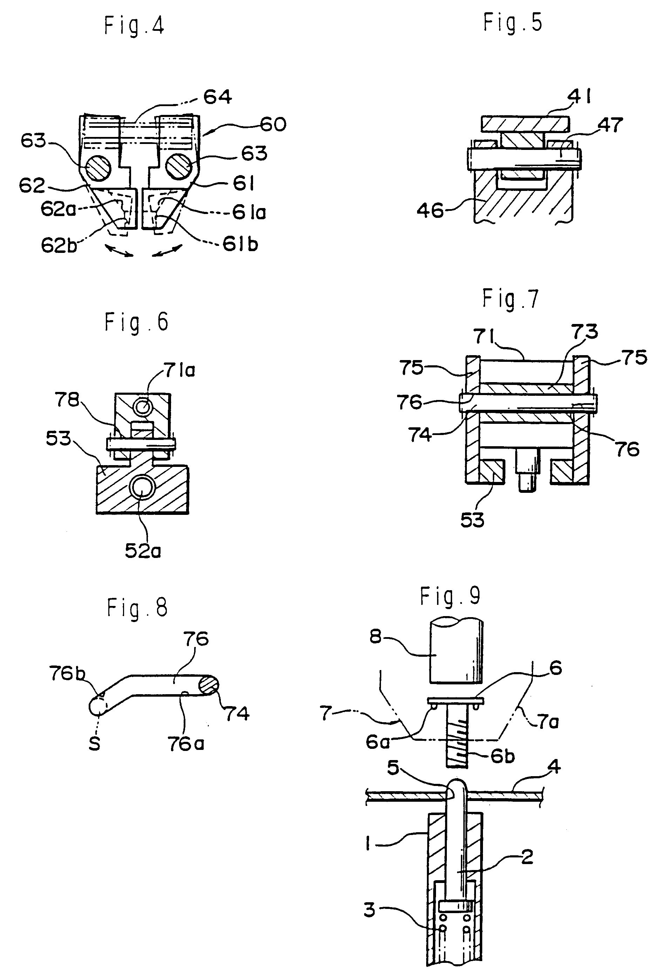

Figs. 1 to 8 show a system for welding together a work-piece 4 and a bolt 6 similar to those described above with reference to Fig. 9. A resistance welder 20 is equipped with an upper electrode 21 and a lower electrode 22. In the vicinity of the resistance welder 20, there is arranged a part feeder 31 which acts to feed means a T-shaped part to be welded, e.g the bolt 6 to the vicinity of the two electrodes. The part feeder 31 has a feed hose 32 having at its trailing or delivery end portion a feed pipe 33 which is connected to first transfer means 40.

This first transfer means 40 includes a feed pipe lever 41, an escape cylinder 42, an adjusting screw 43, a support member 45, a head block 46, and a pin 47. The feed pipe lever 41 supports the feed pipe 32 at its leading end through a support plate 48. The head block 46 is attached to the stationery side of later-described second transfer means 50. The feed pipe lever 41 is hinged to the head block 46 through the pine 47. To the feed pipe lever 41, there is attached the escape cylinder 42 with its rod 42a abutting against the upper surface of the head block 46. The trailing end of the feed pipe lever 41 can abut against the adjusting screw 43 which is screwed in an adjusting plate 49 fixed on the head block 46. The feed pipe lever 41 is rocked around the pipe 47 by the action of the escape cylinder 42, and the adjusting screw 43 acts to position the feed pipe lever 41 in the counter-clockwise direction. The adjusting screw 43 is used to align the axis A of the feed pipe 22 for extruding the bolt 6 to be welded and the axis B of a split hole which is defined by the fingers 61 and 62 of the later-described chuck means 60.

The second transfer means 50 includes a head pipe 51, fixed on the resistance welder 20 by a holding member 55, a head cylinder 52 and an insertion base 53. The head pipe 51 has its leading end attached to the head block 46 of the aforementioned first transfer means 40. To the trailing end of the head pipe 51, there is attached the head cylinder 52 with its rod 52a passing through the head pipe 51 so that its leading end projects out of the head pipe 51. The rod 52a has its circumferential portion cut off in the axial direction so that its rotations are regulated by sliding contact with the head block 46. The insertion base 53 is attached to the leading end of the rod 52a. The head cylinder 52 is connected with an air supply source through a electromagnetic valve (not shown).

The rod 52a acting as the second transfer means 50 is extended, when the workpiece 4 is positioned with respect to the lower electrode 22 so that a welding start signal is issued.

To the leading end of the insertion base 53 of the second transfer means 50, there is attached chuck means 60 which includes fingers 61 and 62, a pair of pins 63, and a compression coil spring 64, as shown in Fig. 4. The individual pins 63 are attached in parallel to the end of the insertion base 53. Finger 61 is hinged to one of the pins 63, and 62 is hinged to the other pin 63. These fingers 61 and 62 are arranged to face each other and are each formed with inverted conical chucking faces 61a and 62a and split holes 61b and 62b for relieving the stem of the bolt 6. Between the fingers 61 and 62, there is interposed a compression coil spring 64 biasing the fingers 61 and 62 toward an ordinarily closed position to chuck the bolt 6. Thus, the chuck means 60 is adapted to support the bolt 6 elastically. When the bolt 6 is pushed by later-described push means 70, however, the fingers 61 and 62 are opened as their chucking faces 61a and 62a abut against the head of the bolt 6 so that the bolt 6 can be pushed out of the fingers 61 and 62.

With the rod 52a of the second transfer means 50 extended, the bolt 6 is chucked by the fingers 61 and 62 has its axis aligned with that of a later-described guide pin 80.

To the insertion base 53 of the second transfer means 50, there is attached the push means 70. This push means 70 is composed of a pin joint 78, an insertion cylinder 71 and a guide mechanism 72. The insertion cylinder 71 connected by piping 77 to an air supply via an electromagnetic valve (not shown), has it rod 71a connected to the insertion base 53 through the pin joint 78, as shown in Fig. 6, so that it can swing up and down with respect to the insertion base 53. The guide mechanism 72 is composed of a push block 73, a guide pin 74 and a pair of guide plates 75. The push block 73 has its leading end 73a shaped to advance inside the fingers 61 and 62 of the chuck means and its end face flattened to push the bolt 6. The guide plates 75 are formed with guide holes 76.

These guide holes 76 are bent, as shown in Fig. 8, one 76a of the guide holes 76 is extending parallel with the rod 52a of the second transfer means 50, and the other guide hole 76b extending in parallel with the axis of the two electrodes 21 and 22. In the push block 73, there is fixed the guide pin 74 which has its two ends projecting from the two end faces of the push block 73, as shown in Fig. 7. The two ends of the guide pin 74 are inserted into the guide holes 76 of the guide plates 75. When the rod 71a of the insertion cylinder 71 is extended, the push block 73 moves along the guide holes 76 of the guide plates 75 to push the head of the bolt 6, which is chucked by the chucked means 60, by its leading end.

The lower electrode 22 is formed with an axially-extending holding hole 23 in which is fitted the guide pin 80 which is inserted into the hole (or the welding preliminary hole) 5 formed in the work-piece (or the steel sheet) 4, for location of the work-piece 4 with respect to the lower electrode 22. The guide pin 80 has a smaller-diameter portion leading end 80a with its end face rounded into a spherical shape and a larger-diameter portion 80b at the other end. The guide pin 80 which can be moved up and down by transfer means (not shown) retracts into the lower electrode 22, when the bolt 6 is to be welded, and projects to a predetermined height from the top of the lower electrode 22 at other times. When the work is to be positioned, the small diameter heading and portions 80a of the guide pin 80 is inserted into the hole 5 of the work-piece 4 to prevent horizontal movement of the work-piece 4 with respect to the lower electrode 22. Movement of the guide pin 80 between its extended end and retracted positions is detected by a sensor (not shown). Although in the above the part to be welded is a bolt, it will be understood that the invention is applicable to any T-shaped part which can be chucked.

Also it is necessary that the electrode axis be vertical; it may be horizontal or, indeed, at any angle.

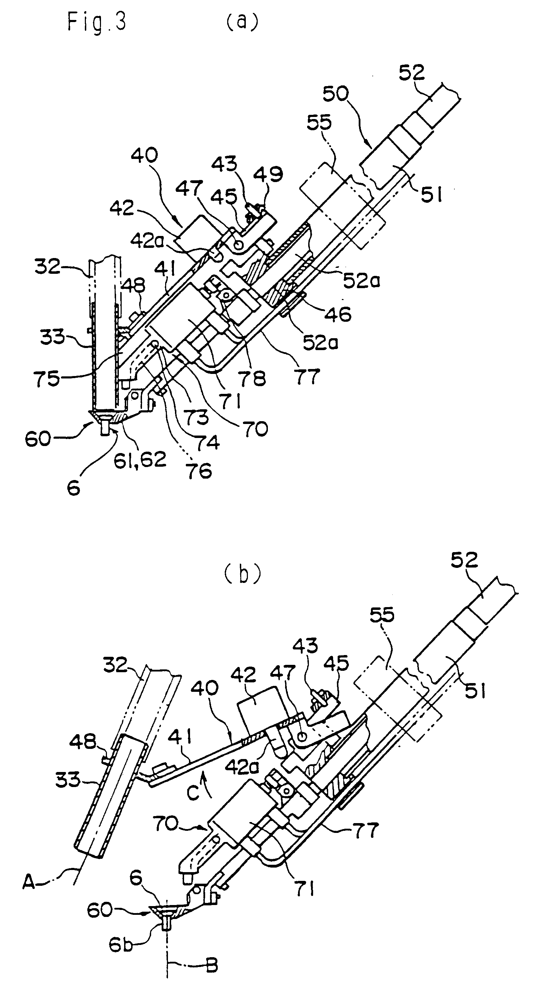

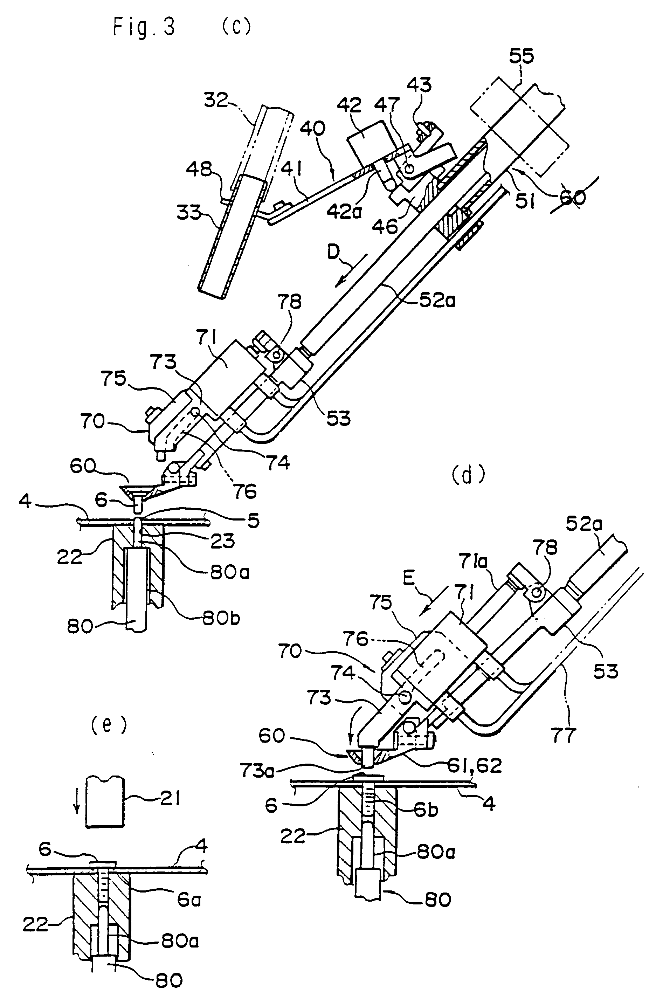

In operation, the bolt 6 disposed in a predetermined direction by the part feeder 31 is discharged through the feed hose 32 from the feed pipe 33 to be received by the fingers 61 and 62 of the chuck means 60, as shown in Fig. 3(a). Since, in this state, the two fingers 61 and 62 are biased toward the closed position by the compression spring 64, the bolt 6 is held by the chuck means 60 with its stem 6b fitted in the split hole 61b and 62b having a slightly larger diameter and its head abutting the inverted-conical chucking faces 61b and 62a. As a result, the bolt 6 is centred and held horizontal by the split holes and the chucking faces so that it is chucked in the upright position by the chuck means 60.

With the bolt 6 chucked as shown in Fig. 3(b), the feed pipe 33 is moved away from the chuck means 60 by the first transfer means 40. Specifically, the rod 52a is extended by changing the compression air to the escape cylinder 42 so that the rod 42a and the head block 46 come into abutment. Hence, the feed pipe lever 41 for holding the feed pipe 33 rocks in the direction of arrow C so moving the lower end of the feed pipe 33 away from the chuck means 60.

With the feed pipe 33 retracted, as shown in Fig, 3(c), the bolt 6 held by the chuck means 60 is moved toward the lower electrode 22 (i.e in the direction of arrow D) by extension of the rod 52a of the second transfer means 50, to have its axis aligned with that of the guide pin 80. In this state, the work-piece is conveyed by conveyor means (not shown) and positioned by the guide pin 80.

When the bolt 6 and the guide pin 80 are aligned, as shown in Fig. 3(d), the push means 70 has its rod 71a extended in the direction of arrow E so that the push block 73 is moved along the guide holes 76 of the guide plates 75. Since the other guide hole 76 extends along the axis of the upper and lower electrodes 21 and 22, the bolt 6 held by the chuck means 60 is pushed directly by the push block 73 positioned just above. When the bolt 6 is pushed by the push block 73, the inverted-conical chucking faces 61a and 62a of the fingers 61 and 62 are pushed by the head of the bolt 6 so opening the fingers 61 and 62 to push the bolt 6 downward. Since, in this state, the guide pine 80 for positioning the work-piece is retracted into the lower electrode 22, the stem 6b of the bolt 6 is inserted into the hole 5 of the work-piece 4 and the hole 23 of the lower electrode 22.

The bolt 6 is released from the chuck means 60 not by the upper electrode 21 but by the push block 73. Thus, since interference between the upper electrode and the chuck is eliminated in contrast to the prior art there can be no wear in the upper electrode 21. As a result, the upper electrode 21 has a far longer life than in a conventional system so avoiding frequent replacement and facilitating its maintenance.

If the stem of the bolt 6 fails to enter the hole 5 of the work-piece or the holding hole 23 of the lower electrode 22, the guide pin 74 of the push means 70 fails to reach the point S of the guide hole 76. Thus, welding failures can be prevented in advance by detecting such abnormal motions in terms of the stroke of the insertion cylinder 71 or deviations a predetermined operation time.

After the insertion of the bolt 6 into the work-piece, the rod 71a of the push means 70 and the rod 52a of the second transfer means 50 are retracted to return the chuck means 60 to the position shown in Fig. 3(b) and individual fingers 61 and 62 of the chuck means 60 are once again closed by the compression coil spring 64. The feed pipe 33 at the side of the part feeder 31 is then returned to the initial position, as shown in Fig. 3(a), by the retraction of the rod 42a of the first transfer means 40 so that another bolt 6 can be fed to the chuck means 60.

Following retraction of the chuck means 60, a weld indicating signal is outputted to the resistance welder 20 so that the upper electrode 21 is moved down to bring the projections 6a of the head of the bolt 6 into contact with the work-piece 4, as shown in Fig. 3(e). In this state, welding current is passed between the upper electrode 21 and the lower electrode 22 so that projection welding is accomplished by intense heading and melting the projections 6a. Since, the chuck means 60 is moved away from the upper and lower electrodes 21 and 22, it is remote from the influence of the pressure and the welding heat of the upper and lower electrodes 21 and 22, there is no thermal deterioration of the compression coil spring 64, and the durability and reliability of the chuck means 60 are enhanced.

The push block 73 and the fingers 61 and 62 come into sliding contact when the bolt 6 hold by the chuck means 60 is to be pushed out by the push block 73. If, however, the two members have high hardness, wear is drastically reduced to an acceptable level.

As has been described hereinbefore, the part chucked by the chuck means is pushed into the hole of the work by the push means so that, the interference between the electrode and the chuck means can be eliminated to avoid wear of the electrodes, which might otherwise be caused by the chuck means. Thus, less frequent repair or replacement of the electrode is necessary, as compared with conventional systems and the working efficiency is enhanced.

Moreover, since the shape of the portion of the push means for pushing the part to be welded is held in the predetermined one for a long time, the part can be accurately inserted into the hole of the work.

Also, because the chuck means can be moved away from the electrode by the first transfer means and the second transfer means, it is protected against the electrode pressure and the welding heat, arising during each welding operation, so improving the durability and reliability of the chuck means preventing erroneous insertion of bolts to achieve consistent welding quality.

## Claims

1. Automatic apparatus for feeding a work-part (6), to be welded in a hole in a work-piece (4), the apparatus comprising feed means (31,32,33) for feeding the work-part (6) to the vicinity of a welding electrode; chuck means (60) for removably chucking the work-part fed by the feed means; first transfer means (40) for transferring a work-part delivery portion (33) of the feed means to and from a delivery position wherein the work-part is delivered to the chuck means; a guide pin (80) carried by the electrode for insertion into the work-piece (4) when said work-piece is to be positioned; second transfer means (50) for positioning the work-part, held by the chuck means (60), concentrically of the guide pin of the electrode and including push means (70) for pushing the work-part, concentrically of the guide pin (80), to insert the work-part (6) into the hole in the said work-piece (4).

2. Apparatus according to Claim 1 wherein the second transfer means (50) connected to the chuck means (60) and the push means (70) is carried by the second transfer means (50).

3. Apparatus according to Claim 1 or Claim 2 wherein the feed means includes; a part feeder (31) having a feed hose (32); and a feed pipe (33) attached to the trailing or delivery end portion of the feed hose and connected to the first transfer means (40).

4. Apparatus according to any preceding claim, wherein the chuck means (60) includes fingers (61,62) for gripping the work-part (6), the fingers being biased toward a closed position.

5. Apparatus according to any preceding claim, wherein the first transfer means (40) includes a feed pipe lever (41), movable by an actuator (42) to displace the said delivery end portion of the feed means (31,32,33).

6. Apparatus according to any preceding claim, wherein the second transfer means (50) includes a head pipe (51), a head cylinder (52) and an insertion base (53).

7. Apparatus according to any preceding claim, wherein the push means includes a pin joint (78), an insertion cylinder (71) and guide means (72) for guiding the part.

8. Apparatus according to Claim 7, wherein the guide means includes a push block (73), a guide pin (74) and a pair of guide plates (75) having guide holes (76).

9. Apparatus according to Claim 1 or Claim 2, wherein the push means (70) and the chuck means (60) are mounted for movement together to bring the work-part (6) into coaxial alignment with the guide pin (80), the push means (70) including an actuator (71) for advancing the push means relative to the chuck means (60) to displace the work-part (6) from the chuck.

## Patentansprüche

1. Automatische Einrichtung zum Zuführen eines Arbeitsteils (6), das in ein Loch in einem Werkstück (4) geschweißt werden soll, wobei die Einrichtung folgendes umfaßt: ein Zuführungsmittel (31,32,33) zum Zuführen des Arbeitsteils (6) zu der Nähe der Schweißelektrode; ein Einspannmittel (60) zum entnehmbaren Einspannen des durch das Zuführungsmittel zugeführten Arbeitsteils; ein erstes Überführungsmittel (40) zum Überführen eines Arbeitsteil-Abgabeteils (33) des Zuführungsmittels zu und aus einer Abgabeposition, worin das Arbeitsteil an das Einspannmittel abgegeben wird; einen von der Elektrode getragenen Führungsstift (80) zum Einfügen in das Werkstück (4), wenn das Werkstück positioniert werden soll; ein zweites Überführungsmittel (50) zum Positionieren des durch das Einspannmittel (60) gehaltenen Arbeitsteils konzentrisch zu dem Führungsstift der Elektrode und umfassend ein Drückmittel (70) zum Drücken des Arbeitsteils konzentrisch zu dem Führungsstift (80), um das Arbeitsteil (6) in das Loch in dem Werkstück (4) einzuführen.

2. Einrichtung gemäß Anspruch 1, worin das zweite Überführungsmittel (50) mit dem Einspannmittel (60) verbunden und das Drückmittel (70) von dem zweiten Überführungsmittel (50) getragen ist.

3. Einrichtung gemäß Anspruch 1 oder 2, worin das Zuführungsmittel folgendes umfaßt: eine Teil-Zuführungseinrichtung (31), die einen Zuführungsschlauch (32) hat; und ein Zuführungsrohr (33), das an dem herunterhängenden Endteil oder Abgabeendteil des Zuführungsschlauchs angebracht und dem ersten Überführungsmittel (40) verbunden ist.

4. Einrichtung gemäß irgendeinem vorhergehenden Anspruch, worin das Einspannmittel (60) Finger (61, 62) zum Greifen des Arbeitsteils (6) aufweist, wobei die Finger nach einer geschlossenen Position zu vorgespannt sind.

5. Einrichtung gemäß irgendeinem vorhergehenden Anspruch, worin das erste Überführungsmittel (40) einen Zuführungsrohrhebel (41) aufweist, der durch einen Stellantrieb (42) bewegbar ist, um den Abgabeendteil des Zuführungsmittels (31,32,33) zu verlagern.

6. Einrichtung gemäß irgendeinem vorhergehenden Anspruch, worin das zweite Überführungsmittel (50) ein Kopfrohr (51), einen Kopfzylinder (52) und eine Einfügungsbasis (53) umfaßt.

7. Einrichtung gemäß irgendeinem vorhergehenden Anspruch, worin das Drückmittel ein Stiftgelenk (78), einen Einführungszylinder (71) und ein Führungsmittel (72) zum Führen des Teils umfaßt.

8. Einrichtung gemäß Anspruch 7, worin das Führungsmittel einen Drückblock (73), einen Führungsstift (74) und ein Paar Führungsplatten (75), die Führungsöffnungen (76) haben, umfaßt.

9. Einrichtung gemäß Anspruch 1 oder 2, worin das Drückmittel (70) und das Einspannmittel (60) zur Bewegung miteinander angebracht sind, um das Arbeitsteil (6) in coaxiale Fluchtung mit dem Führungsstift (80) zu bringen, wobei das Drückmittel (70) einen Stellantrieb (71) zum Vorschieben des Drückmittels relativ zu dem Einspannmittel (60), um das Arbeitsteil (6) aus der Einspannvorrichtung zu verlagern, umfaßt.

## Revendications

1. Appareil automatique pour alimenter une pièce usinée (6), qui doit être soudée dans un trou d'une pièce usinée (4), l'appareil comprenant un moyen d'alimentation (31, 32, 33) pour alimenter la pièce usinée (6) au voisinage d'une électrode de soudage, un moyen de mandrin de serrage (60) pour serrer de manière amovible la pièce usinée alimentée par le moyen d'alimentation, un premier moyen de transfert (40) pour transférer une partie de délivrance de la pièce usinée (33) du moyen d'alimentation vers et depuis une position de délivrance dans laquelle la pièce usinée est délivrée au moyen de mandrin de serrage, une broche de guidage (80) supportée par l'électrode pour l'insertion dans la pièce usinée (4) lorsque ladite pièce usinée doit être positionnée, un second moyen de transfert (50) pour positionner la pièce usinée, maintenue par le moyen de mandrin de serrage (60), de manière concentrique par rapport à la broche de guidage de l'électrode et comportant un moyen de poussée (70) pour pousser la pièce usinée de manière concentrique par rapport à la broche de guidage (80), pour insérer la pièce usinée (6) dans le trou de ladite pièce usinée (4).

2. Appareil selon la revendication 1, dans lequel le second moyen de transfert (50) connecté au moyen de mandrin de serrage (60) et au moyen de poussée (70) est supporté par le second moyen de transfert (50).

3. Appareil selon la revendication 1 ou la revendication 2, dans lequel le moyen d'alimentation comporte, un chargeur de pièce (31) ayant un tuyau d'alimentation (32) et une conduite d'alimentation (33) fixée à la partie d'extrémité arrière ou extrémité de délivrance du tuyau d'alimentation et raccordée au premier moyen de transfert (40).

4. Appareil selon l'une quelconque des revendications précédentes, dans lequel le moyen de mandrin de serrage (60) comporte des doigts (61, 62) pour saisir la pièce usinée (6), les doigts étant sollicités vers une position fermée.

5. Appareil selon l'une quelconque des revendications précédentes, dans lequel le moyen de transfert (40) comporte un levier de conduite d'alimentation (41) déplaçable par un mécanisme d'actionnement (42) pour déplacer ladite partie d'extrémité de délivrance dudit moyen d'alimentation (31, 32, 33).

6. Appareil selon l'une quelconque des revendications précédentes, dans lequel le second moyen de transfert (50) comporte une conduite de tête (51), un cylindre de tête (52) et une base d'insertion (53).

7. Appareil selon l'une quelconque des revendications précédentes, dans lequel le moyen de poussée comporte un joint de broche (78), un cylindre d'insertion (71) et un moyen de guidage (72) pour guider la pièce.

8. Appareil selon la revendication 7, dans lequel le moyen de guidage comporte un bloc de poussée (73), une broche de guidage (74) et une paire de plaques de guidage (75) comportant des trous de guidage (76).

9. Appareil selon la revendication 1 ou la revendication 2, dans lequel le moyen de poussée (70) et le moyen de mandrin de serrage (60) sont montés pour effectuer un mouvement ensemble afin d'amener la pièce usinée (6) en alignement coaxial avec la broche de guidage (80), le moyen de poussée (70) comportant un mécanisme d'actionnement (71) pour avancer le moyen de poussée par rapport au moyen de mandrin de serrage (60) afin de déplacer la pièce usinée (6) du mandrin de serrage.
